(19) Europäisches Patentamt
European Patent Office
Office européen des brevets

(11) **EP 2 244 326 A1**

(12) **EUROPÄISCHE PATENTANMELDUNG**

(43) Veröffentlichungstag:
**27.10.2010 Patentblatt 2010/43**

(51) Int Cl.:
***H01M 8/04*** *(2006.01)*

(21) Anmeldenummer: **10003610.2**

(22) Anmeldetag: **31.03.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA ME RS**

(30) Priorität: **24.04.2009 DE 102009018881**

(71) Anmelder: **Staxera GmbH**
**01237 Dresden (DE)**

(72) Erfinder:
• **Reinert, Andreas**
**01277 Dresden (DE)**
• **Strohbach, Thomas**
**01139 Dresden (DE)**

(74) Vertreter: **Schumacher & Willsau**
**Patentanwaltsgesellschaft mbH**
**Nymphenburger Strasse 42**
**80335 München (DE)**

(54) **Verfahren zur Ermittlung eines Brennstoffumsatzes einer Brennstoffzellenanordnung**

(57) Die vorliegende Erfindung beschreibt eine Steuereinrichtung zum Bestimmen eines tatsächlichen Brennstoffumsatzes für eine Brennstoffzellenanordnung, mit einer Spannungsempfangseinrichtung zum Empfangen von Werten einer über der Brennstoffzellenanordnung anliegenden Spannung, einer Brennstoffstromeinstelleinrichtung zum Einstellen eines der Brennstoffzellenanordnung zuführbaren oder zugeführten Brennstoffstromes und/oder einer Stromstärkeneinstelleinrichtung zum Einstellen einer von der Brennstoffzellenanordnung abgegebenen Stromstärke, sowie einem Speicher zum Speichern von Kalibrationsdaten, welche eine Soll-Beziehung zwischen einem Brennstoffumsatz der Brennstoffzellenanordnung und einer über der Brennstoffzellenanordnung anliegenden elektrischen Spannung betreffen. Die Steuereinrichtung ist dazu ausgelegt, einen ersten Spannungswert zu empfangen; nach dem Empfangen des ersten Spannungswertes eine Änderung des der Brennstoffzellenanordnung zugeführten Brennstoffstroms und/oder der von der Brennstoffzellenanordnung abgegebenen Stromstärke zu steuern; und nach der Änderung einen zweiten Spannungswert zu empfangen. Ferner ist die Steuereinrichtung dazu ausgelegt, den tatsächlichen Brennstoffumsatz der Brennstoffzellenanordnung basierend auf dem ersten Spannungswert, dem zweiten Spannungswert und den Kalibrationsdaten zu bestimmen.

Die Erfindung betrifft außerdem ein entsprechendes Verfahren und eine Brennstoffzellenanordnung.

Figur 6

**Beschreibung**

Die vorliegende Erfindung betrifft ein Verfahren zur Ermittlung des Brennstoffumsatzes einer Brennstoffzellenanordnung, sowie eine Steuereinrichtung zum Umsetzen des Verfahrens und eine Brennstoffzellenanordnung, insbesondere einen Brennstoffzellenstack.

Beim Betrieb von Brennstoffzellenanordnungen, insbesondere von Brennstoffzellenstacks bzw. Brennstoffzellenstapeln, also Anordnungen hintereinander oder nebeneinander gestapelter Brennstoffzellen, ist es wichtig, die Betriebsbedingungen der Brennstoffzellen möglichst genau zu kennen und zu steuern, um einen möglichst effizienten und wirtschaftlichen Betrieb gewährleisten zu können. Dazu werden verschiedene Betriebsparameter einer Brennstoffzellenanordnung überwacht.

In JP-11097049 A wird beispielsweise beschrieben, einen Abfall der Spannung einer Brennstoffzelle zu überwachen, um ihre Lebensdauer vorherzusagen, damit ein ineffizienter Betrieb einer Brennstoffzelle vermieden werden kann, die ihre Lebensdauer überschritten hat.

Um einen effizienten Betrieb zu gewährleisten, ist es in der Regel erforderlich, den Brennstoffumsatz der Brennstoffzellenanordnung möglichst genau gemäß betriebsbedingten Erfordernissen einzustellen. Der Brennstoffumsatz beschreibt dabei das Verhältnis zwischen der Menge an Brennstoff, die chemisch zur Gewinnung von Elektrizität umgesetzt wird, zu der gesamten Menge an Brennstoff, die der Brennstoffzellenanordnung zugeführt wird. Insbesondere bei Mikro-Brennstoffzellensystemen für Kraftwärmekopplung (KWK) ist beispielsweise ein hoher elektrischer Wirkungsgrad ein wichtiger Faktor für deren Wirtschaftlichkeit. Für einen hohen elektrischen Wirkungsgrad ist ein möglichst hoher Brennstoffumsatz notwendig. Bei Systemen, bei denen Brennstoffzellenanordnungen mit einer Dampfturbine und einer Gasturbine kombiniert sind, kann es je nach Betriebszustand auch vorteilhaft sein, die Brennstoffzellenanordnung mit einem verhältnismäßig niedrigen Brennstoffumsatz zu betreiben. Auch hierbei ist es erforderlich, den Brennstoffumsatz möglichst genau zu kennen und steuern zu können.

Der Brennstoffumsatz $U_B$ einer Brennstoffzellenanordnung wird im Allgemeinen über die Beziehung

$$U_B = (\Phi_{in} - \Phi_{out})/\Phi_{in}$$

ermittelt, wobei $\Phi_{in}$ den der Brennstoffzellenanordnung zugeführten Brennstoffmengenstrom bezeichnet und $\Phi_{out}$ den aus der Brennstoffzellenanordnung ausströmenden Brennstoffmengenstrom. Zur Bestimmung von $U_B$ ist es demnach notwendig, die der Brennstoffzelle zugeführte Brennstoffmenge und die von ihr abgegebene Brennstoffmenge zu ermitteln. Dies wird in der Regel dadurch erreicht, dass durch Volumenstrommesser der zugeführte Brennstoffvolumenstrom und der abgeführte Brennstoffvolumenstrom gemessen werden. Falls der Brennstoff nicht in Reinform vorliegt, ist es gegebenenfalls erforderlich, auch zugehörige Brennstoffkonzentrationen zu bestimmen. Dieser Fall kann zum Beispiel auftreten, wenn statt eines reinen Wasserstoffgases ein Reformat als Brennstoff Verwendung findet. Alternativ werden gelegentlich statt Volumenströmen Massenströme gemessen.

Sensoren zum Messen von Volumen- oder Massenströmen sind allerdings verhältnismäßig teuere Komponenten, welche die Systemkosten für eine Brennstoffzellenanordnung in die Höhe treiben und sich damit nachteilig auf ihre Wettbewerbsfähigkeit auswirken. Dies gilt insbesondere für relativ kleine Systeme, die zur dezentralen Gewinnung elektrischen Stroms vorgesehen sind.

Ferner weisen Sensoren zum Messen von Volumen- oder Masseströmen beispielsweise von Gasen und Proportionalventile zum Steuern von Volumenströmen nur eine endliche Genauigkeit auf. Außerdem unterliegen sie Alterungsprozessen, die dazu führen können, dass beispielsweise bei einem Massenstrommessgerät über seine Lebensdauer eine Drift auftritt, die sich negativ auf seine Messgenauigkeit auswirkt.

Derartige Effekte können dazu führen, dass bei der Steuerung eines Prozesses innerhalb einer Brennstoffzellenanordnung ein Brennstoffumsatz eingestellt wird, der nicht dem gewünschten Brennstoffumsatz (Sollwert) entspricht. Insbesondere bei Brennstoffzellenanordnungen, die mit einem hohen Brennstoffumsatz nahe bei 100 % betrieben werden, kann dies bei einem tatsächlichen Brennstoffumsatz, der oberhalb des Sollwertes liegt, zu einer Degradation beziehungsweise Zerstörung der Brennstoffzellenanordnung führen, so dass eine nachhaltige Beschädigung der Brennstoffzellenanordnung auftritt. Ist hingegen der tatsächliche Brennstoffumsatz niedriger als gewünscht, ergibt sich dadurch ein niedriger Wirkungsgrad der Brennstoffzellenanordnung bei der Produktion elektrischen Stroms.

Um eine unerwünschte Abweichung des tatsächlichen Brennstoffumsatzes von seinem Sollwert zu vermeiden, werden üblicherweise bei einer Brennstoffzellenanordnung vorhandene Einheiten zum Steuern beziehungsweise Regeln eines Brennstoffstroms wie zugeordnete Messgeräte und Ventile regelmäßig einer Wartung beziehungsweise Kalibrierung unterzogen. Derartige Wartungen finden in bestimmten Abständen statt und treiben die Betriebskosten einer Brennstoffzellenanordnung in die Höhe.

Die vorliegende Erfindung hat zur Aufgabe, die oben erwähnten Probleme zu lösen und insbesondere eine Möglichkeit bereitzustellen, den Wartungsbedarf von Brennstoffzellenanordnungen zu verringern.

Im Folgenden bezeichnet eine Brennstoffzellenanordnung allgemein eine Anordnung mit mindestens einer einzelnen Brennstoffzelle, also einem Element mit einem Elektrolyten, einer Anode und einer Kathode, in dem chemische Energie direkt unter Ausnutzung eines Katalysators in elektrischen Strom umgewandelt wird. Der Begriff Brennstoffzellenanordnung umfasst daher sowohl ein einzelnes solches Element, wie auch eine Anordnung mehrerer derartiger Brennstoffzellen. Insbesondere umfasst der Begriff Brennstoffzellenanordnung einen sogenannten Brennstoffzellenstapel oder Brennstoffzellstack, bei dem mehrere Brennstoffzellen hintereinander oder nebeneinander geschaltet sind, um eine höhere Ausgangsspannung zu liefern als eine einzelne Zelle. Mit einem Stoffstrom ist der Strom einer Stoffmenge bezeichnet; in der Praxis wird der Stoffmengenstrom durch Regulieren eines Massen- oder Volumenstroms eingestellt. Mit Brennstoff ist jegliche Art in einer Brennstoffzellenanordnung verwendeter Brennstoff bezeichnet. Insbesondere kann es sich bei dem Brennstoff um Brenngas wie Wasserstoffgas, um Reformat oder mehrphasigen Brennstoff handeln.

Die vorliegende Erfindung baut auf der Erkenntnis auf, dass das Verhältnis der Menge an chemisch umgesetztem Brennstoff zur Menge an bereitgestelltem Brennstoff in einer Brennstoffzellenanordnung, nämlich der Brennstoffumsatz $U_B$ (oder BGU=Brenngasumsatz für den Fall, das Brenngas als Brennstoff eingesetzt wird) als

$$U_B = BGU = \frac{\dot{n}_{verb}}{\dot{n}_{in}} \text{ (Gleichung 1)}$$

geschrieben werden kann. Dabei bedeutet $\dot{n}_{verb}$ die zeitliche Ableitung der verbrauchten Mole des Brennstoffs (die Stoffmenge) und $\dot{n}_{in}$ die zeitliche Ableitung der zugeführten Mole des Brennstoffs. Weiter lässt sich der Faradaysche Wirkungsgrad $\eta_F$ schreiben als

$$\eta_F = \frac{I}{\dot{n}_{verb} \cdot z \cdot F} \text{ . (Gleichung 2)}$$

Dabei ist I die von der betrachteten Brennstoffzellenanordnung abgegebene Stromstärke, z die Anzahl der pro Reaktion erfolgenden Elektronenübergänge (die von der jeweiligen in der Brennstoffzellenanordnung ablaufenden chemischen Reaktion abhängt und für einen bestimmten Brennstoffzellentyp als bekannt anzunehmen ist), und F die Faradaysche Konstante. Unter der Annahme, dass der Faradayschen Wirkungsgrad $\eta_F =1$ ist, ergibt sich insgesamt

$$\frac{U_B \cdot \dot{n}_{in}}{I} = const. \text{ (Gleichung 3)}$$

Die Annahme, dass $\eta_F =1$ gilt, ist in der Regel berechtigt, es sei denn, es treten Leckagen oder andere, nicht mit der chemischen Reaktion zur Erzeugung von Elektrizität verbundene Brennstoffverluste in der Brennstoffzellenanordnung auf.

Der Grundgedanke der Erfindung besteht darin, dass es zur Bestimmung eines tatsächlichen Brennstoffumsatzes einer Brennstoffzellenanordnung nicht notwendig ist, zugeführte und abgeführte Stoffmengenströme direkt zu bestimmen. Vielmehr ist es möglich, bei Kenntnis einer Soll-Beziehung zwischen der über einer Brennstoffzellenanordnung anliegenden Spannung und dem Brennstoffumsatz durch Variation der in der Gleichung 3 auftauchenden Parameter (also insbesondere der Stromstärke und des zugeführten Stoffmengenstromes) und Messen der zugehörigen Änderung der Spannung den tatsächlichen Brennstoffumsatz zu ermitteln. Dies hängt damit zusammen, dass die Spannung über einer Brennstoffzellenanordnung abhängig vom Brennstoffumsatz ist. Wenn nur ein solcher Parameter bei konstanten anderen Parametern variiert wird, ergibt sich dann, wenn der Brennstoffumsatz nicht der Soll-Beziehung folgt, eine deutliche und leicht zu interpretierende Änderung in der Spannungs-Brennstoffumsatz-Kennlinie, aus der sich der tatsächliche Brennstoffumsatz ermitteln lässt. Auf die genaue Bauart der Brennstoffzellenanordnung kommt es erfindungsgemäß nicht an. Die Erfindung lässt sich auf alle Arten von Brennstoffzellenanordungen anwenden, unabhängig davon, ob oxidkeramische, alkalische oder andere Arten von Brennstoffzellen verwendet werden. Die vorliegende Erfindung beschreibt eine Steuereinrichtung zum Bestimmen eines tatsächlichen Brennstoffumsatzes für eine Brennstoffzellenanordnung, mit einer Spannungsempfangseinrichtung zum Empfangen von Werten einer über der Brennstoffzellenanordnung anliegenden Spannung, einer Brennstoffstromeinstelleinrichtung zum Einstellen eines der Brennstoffzellenanordnung zuführbaren oder zugeführten Brennstoffstromes und/oder einer Stromstärkeneinstelleinrichtung zum Einstellen einer von der Brennstoffzellenanordnung abgegebenen Stromstärke, sowie einem Speicher zum Speichern von Kalibrationsdaten, welche eine Soll-Beziehung zwischen einem Brennstoffumsatz der Brennstoffzellenanordnung und einer über der Brennstoffzellenanordnung anliegenden elektrischen Spannung betreffen. Die Steuereinrichtung ist dazu ausgelegt, einen ersten Spannungswert zu empfangen; nach dem Empfangen des ersten Spannungswertes eine Änderung des der Brennstoffzellenanordnung zugeführten Brennstoffstroms und/oder der von der Brennstoffzellenanordnung abgegebenen Stromstärke zu steuern; und nach der Änderung einen zweiten Spannungswert zu empfangen. Ferner ist die Steuereinrichtung dazu ausgelegt, den tatsächlichen Brennstoffumsatz der Brennstoffzellenanordnung basierend auf dem ersten Spannungswert, dem zweiten Spannungswert und den Kalibrationsdaten zu bestimmen. Es werden also in der Regel schon vorhandene Sensoren wie Spannungssensoren verwendet, um auf einfache Art einen tatsächlichen Brennstoffumsatz zu bestimmen. Dadurch lassen sich teure und ungenaue Sensoren zur Bestimmung von Stoffströmen einsparen. Alternativ kann die Steuereinrichtung selbstverständlich ohne großen Aufwand zusätzlich zu schon bekannten Sensoren verwendet werden, um eine unabhängige weitere Möglichkeit zur Bestimmung des Brennstoffumsatzes zu bieten. Ferner ermöglicht die Steuereinrichtung durch das Empfangen mehrer Spannungswerte eine einfache Kalibrierung einer Brennstoffzellenanordnung. Insbesondere können Vorrichtungen zum Steuern einer Brennstoffzufuhr wie Ventile, Pumpen, Leitungssysteme und ähnliches ohne großen Aufwand kalibriert werden. Vor allem ist eine solche Kalibrierung während des Betriebs möglich, ohne dass ein Wartungszyklus durchgeführt werden muss, bei dem die Brennstoffzellenanordnung nicht eingesetzt werden kann.

Zur Bestimmung des tatsächlichen Brennstoffumsatzes wird bevorzugt die Gleichung 3 verwendet. Auch der tatsächliche Brennstoffmengenstrom lässt sich bestimmen. Es ist insbesondere vorteilhaft, bei Änderungen eines der Parameter Stromstärke oder Brennstoffstrom den jeweils anderen Parameter und weitere Betriebsparameter der Brennstoffzellenanordnung konstant zu lassen, um eine Reaktion der Brennstoffzellenanordnung zu erhalten, die nur durch die gezielte Änderung eines Parameters hervorgerufen wird.

Die Stromstärkeneinstelleinrichtung kann derart ausgelegt sein, dass sie eine an der Brennstoffzellenanordnung hängende Last beziehungsweise einen Widerstand einstellt, um so die von der Brennstoffzellenanordnung abgegebene Strömstärke einfach einzustellen. Bei Änderung der Stromstärke tritt gegenüber der Änderung eines Brennstoffstromes zusätzlich ein durch ohmsche Effekte bewirkter Spannungsabfall auf. Dieser zusätzliche Effekt, der sich über das ohmsche Gesetz auswirkt, ist bei der Bestimmung des Brennstoffumsatzes basierend auf den gemessenen Spannungswerten zu berücksichtigen.

Vorzugsweise umfasst die Steuereinrichtung insbesondere einen Mikroprozessor, der über definierte Schnittstellen mit einem oder mehreren Spannungssensoren verbunden ist, welche die Spannung über der Brennstoffzellenanordnung messen und an die Steuereinrichtung weitergeben. Ferner kann der Mikroprozessor beziehungsweise die Steuereinrichtung derart mit einer elektrischen Last verbunden sein, dass die Last durch Steuerbefehle des Mikroprozessors einstellbar ist. Die Kalibrationsdaten können in einem herkömmlichen Speicher wie einem RAM-Speicher gespeichert sein, auf die der Mikroprozessor zugreifen kann. Alternativ können die Daten auf jede weitere geeignete Art gespeichert sein, insbesondere in einem Dauerspeicher wie einem EPROM, einem EEPROM, auf einem Magnetspeicher wie einer Festspeicherplatte oder einem anderen Speichermedium.

Insbesondere können die Kalibrationsdaten die Soll-Beziehung bei konstanter elektrischer Stromstärke beschreiben. Es kann auch vorgesehen sein, dass die Kalibrationsdaten die Soll-Beziehung bei konstantem Brennstoffstrom beschreiben. Ferner kann es vorteilhaft sein, neben den Kalibrationsdaten noch weitere Daten zur Bestimmung des tatsächlichen Brennstoffumsatzes zu speichern, beispielsweise solche, die von der Sollbeziehung abweichende Spannungs-Brennstoffumsatz-Beziehungen betreffen. Insbesondere können verschiedene Kennlinien von Spannungs-Brennstoffumsatz-Beziehungen gespeichert sein, um ein besonders leichtes Bestimmen eines tatsächlichen Brennstoffumsatzes zu ermöglichen.

Bei einer bevorzugten Weiterbildung ist vorgesehen, dass die Steuereinrichtung dazu ausgelegt ist, den tatsächlichen Brennstoffumsatz basierend auf weiteren von der Spannungsempfangseinrichtung empfangenen Spannungswerten zu bestimmen. Insbesondere sollten die weiteren Spannungswerte weiteren Änderungen des Brennstoffstromes beziehungsweise der Stromstärke entsprechen. Auf diese Art lässt sich die Genauigkeit der Brennstoffumsatzbestimmung erhöhen.

Eine besonders bevorzugte Ausführungsform sieht vor, dass die Steuereinrichtung dazu ausgelegt ist, den Brennstoffstrom bei konstanter Stromstärke auf einen Zielwert einzustellen, bei dem die tatsächliche Spannungs-Brennstoffumsatz-Beziehung einen charakteristischen Übergang durchläuft. Analog kann die Steuereinrichtung dazu ausgelegt sein, die Stromstärke bei konstantem Brennstoffstrom auf einen Zielwert einzustellen, bei dem die tatsächliche Spannungs-Brennstoffumsatz-Beziehung einen charakteristischen Übergang durchläuft. Es ist vorteilhaft, wenn die Steuereinrichtung dann dazu ausgelegt ist, einen dem Zielwert entsprechenden Spannungswert als ersten Spannungswert zu empfangen. Die charakteristischen Übergänge der Spannungs-Brennstoffumsatz-Beziehung einer Brennstoffzellenanordnung lassen sich besonders gut zur eindeutigen Identifizierung von Messpunkten verwenden, wodurch sich eine erhöhte Genauigkeit der Brennstoffumsatzbestimmung ergibt. Insbesondere kann es vorteilhaft sein, einen Zielwert einzustellen, bei dem eine tatsächliche Spannungs-Brennstoffumsatz-Kennlinie einen starken Einbruch der Spannung verzeichnet. Ein solcher Einbruch findet bei vielen Brennstoffzellenanordnungen bei einem Brennstoffumsatz von typischerweise etwa 99% statt.

Es wird also besonders vorteilhaft angesehen, wenn die Steuereinrichtung dazu ausgelegt ist, den tatsächlichen Brennstoffumsatz basierend auf einer aus den empfangenen Spannungswerten berechneten Steigung zu bestimmen. Die Steigung lässt sich beispielsweise einer bestimmten Spannungs-Brennstoffumsatz-Kennlinie und bestimmten Brennstoffumsatzwerten zuordnen. Durch Verwenden der Steigung verringern sich Fehler bei der Bestimmung des Brennstoffumsatzes. Dies gilt besonders, wenn mehr als zwei Spannungswerte zur Steigungsbestimmung herangezogen werden.

Die vorliegende Erfindung betrifft auch ein Verfahren zum Ermitteln eines tatsächlichen Brennstoffumsatzes einer Brennstoffzellenanordnung mit den Schritten des Bereitstellens von vorbestimmten Kalibrationsdaten für eine Beziehung zwischen einem Brennstoffumsatz der Brennstoffzellenanordnung und einer über der Brennstoffzellenanordnung anliegenden elektrischen Spannung, des Erfassens einer über der Brennstoffzellenordnung anliegenden ersten elektrischen Spannung, des Änderns eines der Brennstoffzellenanordnung zugeführten Brennstoffstroms und/oder einer von der Brennstoffzellenanordnung abgegebenen Stromstärke, sowie des Erfassens einer nach dem Schritt des Änderns über der Brennstoffzellenanordnung anliegenden zweiten elektrischen Spannung und des Bestimmens des tatsächlichen Brennstoffumsatzes der Brennstoffzellenanordnung basierend auf der ersten elektrischen Spannung, der zweiten elektrischen Spannung und den Kalibrationsdaten.

Die Kalibrationsdaten können die Soll-Beziehung bei konstanter elektrischer Stromstärke und/oder die Soll-Beziehung bei konstantem Brennstoffstrom beschreiben. Ferner kann das Bestimmen des tatsächlichen Brennstoffumsatzes basierend auf weiteren von der Spannungsempfangseinrichtung empfangenen Spannungswerten durchgeführt werden.

Es ist vorteilhaft, wenn der Brennstoffstrom bei konstanter Stromstärke oder die Stromstärke bei konstantem Brennstoffstrom auf einen Zielwert eingestellt wird, bei dem die tatsächliche Spannungs-Brennstoffumsatz-Beziehung einen charakteristischen Übergang durchläuft. Insbesondere kann ein dem Zielwert entsprechender Spannungswert als erster Spannungswert empfangen werden, wobei der Zielwert einem Brennstoffumsatz von etwa 99% entsprechen kann, wenn dort ein charakteristischer Einbruch der Spannungs-Brennstoffumsatz-Kennlinie vorliegt.

Ferner kann das Verfahren vorsehen, dass der tatsächliche Brennstoffumsatz basierend auf einer aus den empfangenen Spannungswerten berechneten Steigung bestimmt wird.

Das Verfahren eignet sich besonders zur Anwendung auf eine Brennstoffzellenanordnung, wenn die Brennstoffzellenanordnung ein Brennstoffzellenstack ist. Ein solcher Stack oder Stapel verfügt in der Regel schon über mindestens einen Spannungssensor, der die Spannung über den Stack misst und der zur Umsetzung des Verfahrens eingesetzt werden kann.

Die Brennstoffzellenanordnung, auf die das Verfahren angewendet wird, kann aber auch eine einzelne Brennstoffzelle sein oder zwei oder mehr Brennstoffzellen umfassen. Insbesondere kann vorgesehen sein, dass die Brennstoffzellen Teil eines Brennstoffzellenstacks sind. So lässt sich der Brennstoffumsatz und damit die Leistungsfähigkeit eines Teils des Brennstoffzellenstacks bestimmen.

Die Erfindung betrifft außerdem eine Brennstoffzellenanordnung mit einer Messeinrichtung zum Erfassen einer über der Brennstoffzellenanordnung anliegenden Spannung, und einer Steuereinrichtung wie oben beschrieben. Die Brennstoffzellenanordnung kann ein Brennstoffzellenstack oder eine Brennstoffzelle sein. Sie kann auch zwei oder mehr Brennstoffzellen umfassen, die vorzugsweise Teil eines Brennstoffzellenstacks sind.

Besonders vorteilhaft kann es sein, die Erfindung auf unterschiedliche Unterteilungen einer übergeordneten Brennstoffzellenanordnung anzuwenden. Beispielsweise kann die Erfindung nicht nur auf einen Brennstoffzellenstack als Ganzes angewendet werden, sondern es kann auch eine erfindungsgemäße Bestimmung des Brennstoffumsatzes einer oder mehrerer Untereinheiten des Stacks vorgenommen werden, die sich aus einer Brennstoffzelle oder mehreren Brennstoffzellen zusammensetzen. So lässt sich die Leistungsfähigkeit eines Stacks auf mehreren Ebenen überwachen, insbesondere können einzelne fehlerhafte Zellen oder Untereinheiten identifiziert werden. Dazu kann vorgesehen sein, dass die über diesen Zellen oder Untereinheiten anliegende Spannung an die Steuereinrichtung weitergeben wird und eine zugeordnete Sollbeziehung für Spannung und Brennstoffumsatz vorliegt.

Die Sollbeziehung kann durch ein theoretisches Modell gegeben sein oder durch Messung bestimmt werden. Insbesondere kann es zweckmäßig sein, die Sollbeziehung durch eine Messung kurz nach Herstellung einer Brennstoffzellenanordnung zu bestimmen. Es kann vorteilhaft sein, für Brennstoffzellenanordnungen eines gemeinsamen Typs, etwa aus einer Serienfertigung, eine gemeinsame Sollbeziehung bereitzustellen, wenn davon ausgegangen werden kann, dass die fraglichen Brennstoffzellenanordnungen im Idealfall ein vergleichbares Verhalten zeigen.

Die Erfindung wird nun mit Bezug auf die Zeichnungen anhand besonders bevorzugter Ausführungsformen erläutert.

Es zeigen:

Figur 1    eine schematische Darstellung eines Brennstoffzellenstacks;

Figur 2    einen beispielhaften Verlauf einer Spannung eines Brennstoffzellenstacks über dem Brennstoffumsatz;

Figur 3    beispielhafte Kennlinien der Spannungs-Brennstoffumsatz-Beziehung bei unterschiedlichen vom Sollwert abweichenden Brennstoffumsätzen;

Figur 4    einen beispielhaften Verlauf der Stackspannung und der Stackspannungsände- rung über den Brennstoffumsatz;

Figur 5    beispielhaft die unterschiedlichen Steigungen von Sehnen zwischen zwei Punk- ten auf ei-

ner Kennlinie einer Spannungs-Brennstoff-umsatz-Kennlinie; und

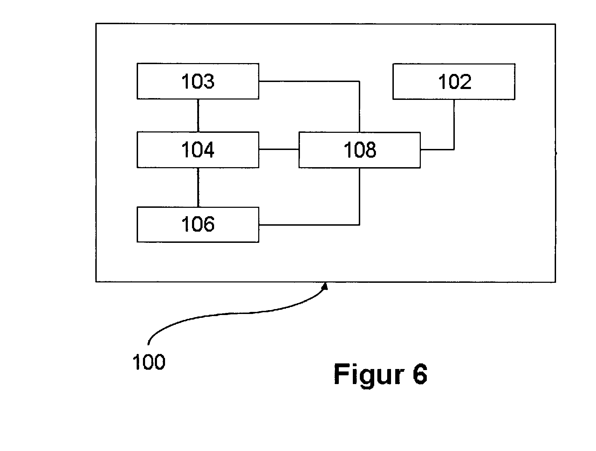

Figur 6    eine schematische Darstellung einer Steuereinrichtung.

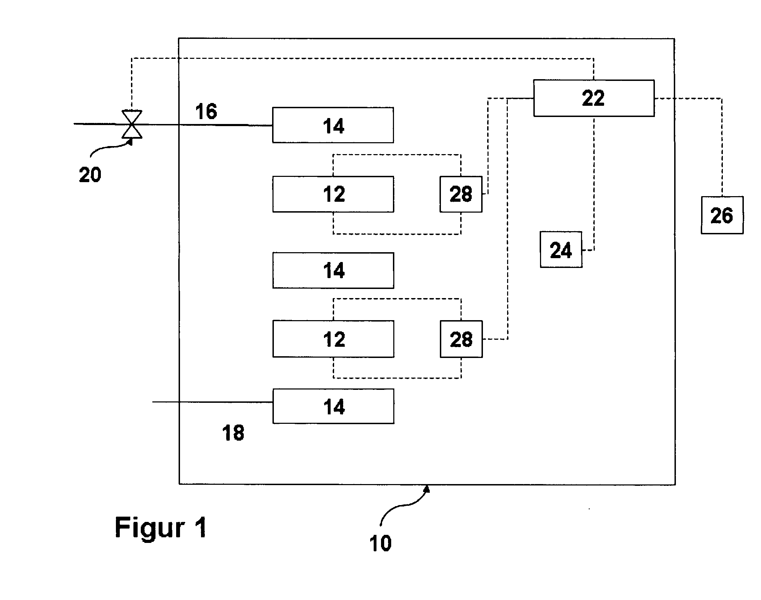

Figur 1 zeigt schematisch einen Brennstoffzellenstack 10. Stromführende Verbindungen sind gestrichelt dargestellt, brennstoffführende Verbindungen sind durchgezogen. Aus Gründen der Klarheit sind nicht alle üblicherweise in einem Stack vorgesehenen Komponenten dargestellt.

Der Stack 10 umfasst mehrere Schichten von einzelnen Brennstoffzellen 12, die auf herkömmliche Weise durch Bipolarplatten (beziehungsweise Polarplatten an den Rändern) 14 voneinander getrennt sind. In diesem Beispiel wird als Brennstoff ein Brenngas verwendet, dass über eine Brenngaszuführung 16 dem Stack zugeführt wird. Über eine Brenngasableitung 18 verlassen Brenngasreste, die nicht innerhalb einer Brennstoffzelle 12 chemisch reagiert haben, den Stack 10. Ein Ventil 20 ist dazu vorgesehen, die Brenngaszufuhr zu steuern. Das Ventil 20 ist mit einer Steuereinrichtung 22 verbunden und kann von der Steuereinrichtung 22 angesteuert werden, um die Brenngaszufuhr zu steuern. Die Steuereinrichtung 22 ist außerdem mit einem Spannungssensor 24 verbunden, der die über dem Stack 10 anliegende Spannung erfasst und an die Steuereinrichtung 22 übermitteln kann.

Darüber hinaus ist die Steuereinrichtung 22 mit einer elektrischen Last 26 verbunden, die durch von dem Stack 10 abgegebenen Strom einer bestimmten Stromstärke durchflossen wird. Die Steuereinrichtung 22 ist dazu eingerichtet, die elektrische Last 26 und damit die von dem Stack 10 abgegebene Stromstärke zu steuern. Es ist allerdings nicht notwendig, dass die Steuereinrichtung 22 dazu eingerichtet ist, sowohl die Stromstärke als auch die Brenngaszufuhr zu steuern, sondern sie kann vielmehr derart eingerichtet sein, dass sie nur eines davon steuert.

Jede Brennstoffzelle 12 weist einen oxidkeramischen Elektrolyten sowie eine Anode und eine Kathode auf (nicht gezeigt). Ferner können weitere Spannungssensoren 28 vorgesehen sein, die bevorzugt jeweils die über einer einzelnen Brennstoffzelle 12 anliegende Spannung erfassen und an die Steuereinrichtung 22 weitergeben. Es können auch Sensoren 28 vorgesehen sein, welche die über mehreren Brennstoffzellen 12 anliegende Spannung erfassen. Die Verspannung des Stacks 10 ist nicht dargestellt.

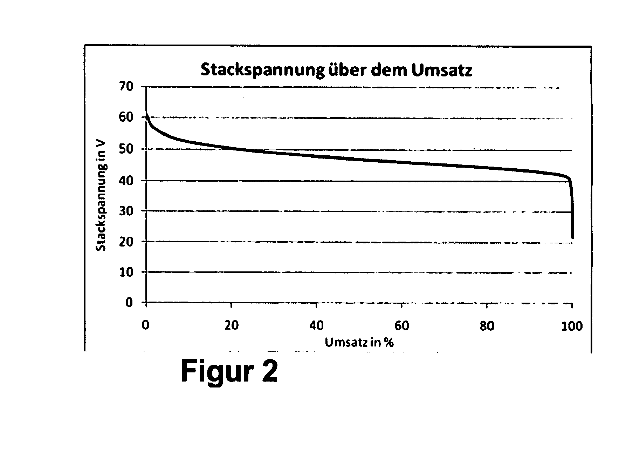

Figur 2 zeigt exemplarisch ein Beispiel für den Verlauf der Stackspannung in Volt (vertikale Achse) über dem Brennstoffumsatz in Prozent (horizontale Achse), also eine Spannungs-Brennstoffumsatz-Kennlinie. Es wird der Fall gezeigt, dass ein Brenngasvolumenstrom variiert wird, bei ansonsten konstanten Parametern.

Insbesondere sind der Widerstand und der von dem Brennstoffzellenstack abgegebene elektrische Strom konstant gehalten, während der Volumenstrom des den Brennstoffzellenstack zugeführten Brenngases variiert wird. Mit zunehmendem Brenngasvolumenstrom wird der Anode mehr Brenngas zugeführt, wodurch sich eine Variation des Brenngasumsatzes ergibt. Die Figur 2 zeigt dabei eine Kalibrationskurve oder eine Sollwertkurve für eine bestimmte Brennstoffzellenanordnung, beispielsweise für einen Stack 10 wie in Figur 1 gezeigt.

Für andere Arten von Brennstoffen und Brennstoffzellenanordnungen ergeben sich ähnliche Kurven oder Kennlinien. Die genaue Form einer Spannungs-Brennstoffumsatz-Beziehung, wie sie hier beispielhaft schematisch dargestellt ist, hängt von den spezifischen Eigenschaften des verwendeten Stacks beziehungsweise der betrachteten Brennstoffzellenanordnung ab. Der allgemeine Kurvenverlauf ist aber dahingehend typisch für eine Brennstoffzellenanordnung, dass er grob in drei Teile eingeteilt werden kann. Man erkennt für niedrige Brennstoffumsätze einen etwa exponentiell verlaufenden Abfall der Spannung (hier dominieren reaktionskinetische Effekte die Kennlinie), der in einen linearen Bereich übergeht, der dem Bereich entspricht, in dem ohmsche Effekte den Verlauf der Kurve dominieren. Für hohe Brennstoffumsätze treten vermehrt Transportverluste auf, die zu einem sehr starken Abfall der Spannung führen. Im gezeigten Fall tritt der starke Abfall bei einem Brennstoffumsatz von etwa 99% auf.

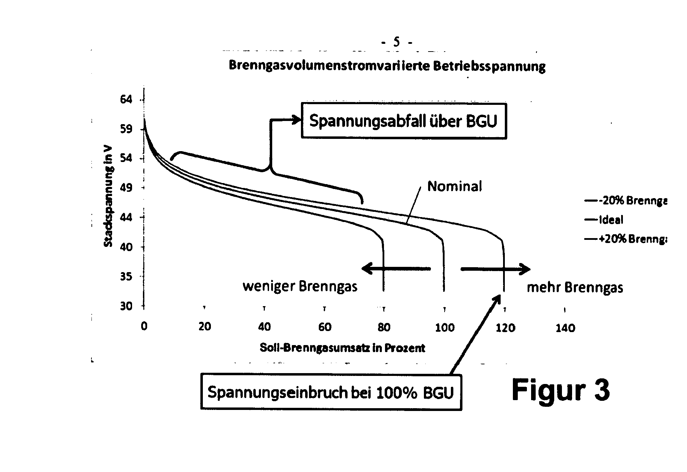

Basierend auf der in Figur 2 gezeigten Kurve zeigt Figur 3 Abweichungen von der in Figur 2 gezeigten Kalibrations- oder Sollwertkurve, wenn der tatsächliche Brennstoffumsatz vom Sollwert abweicht. Dabei steht die Abkürzung BGU für Brenngasumsatz.

Wenn der tatsächliche der Brennstoffzellenanordnung zugeführte Brenngasvolumenstrom über seinem Sollwert liegt, ist der tatsächliche Brennstoffumsatz kleiner, als der Sollwertkurve der Stackspannung über den Umsatz für den Soll-Brennstoffvolumenstrom entsprechen würde. Dies ergibt sich daraus, dass bei gleicher Stromstärke eine größere Menge von Brennstoff zur Anode gebracht wird, aber eine gleiche Gesamtzahl von chemischen Reaktionen zur Erzeugung elektrischen Stroms stattfindet, wodurch der Rest an unverbrauchtem Brennstoff bei höherem Brenngasvolumenstrom größer ist. So ergibt sich ein niedrigerer Brennstoffumsatz. Umgekehrt ist bei kleinerem tatsächlichem Brennstoffvolumenstrom der tatsächliche Brennstoffumsatz größer als der Brenngasumsatz, der sich aus der Sollwertkurve erblicken lässt, da an der Anode ein höherer Prozentsatz des weniger als gewünscht vorhandenen Brennstoffs umgesetzt wird.

Figur 3 zeigt drei Kurven, die für die angesprochenen Fälle repräsentativ sind. Die mittlere Kurve mit durchgezogener Linie entspricht der Sollwertkurve (Nominalkurve oder Idealkurve), wie sie auch in Figur 2 dargestellt ist. Ist der zugeführte Brennstoffvolumenstrom größer als er nach seinem Sollwert eigentlich sein sollte (im Beispiel wird von 20% mehr zugeführtem Brenngas pro Zeiteinheit ausgegangen), ergibt sich theoretisch die in der Figur 3 rechts gezeigte Kurve, die gegenüber der Sollwertkurve gestreckt ist. Ist der tatsächliche Brennstoffvolumenstrom geringer als gewünscht (im Beispiel 20% weniger Brenngas pro Zeiteinheit), verschiebt sich die Sollwertkurve nach links und ist gestaucht. Wie sich aus Figur 3 besonders gut erkennen lässt, ändern sich für verschiedene zugeführte Brennstoffvolumenströme nicht nur die absoluten Werte der Kurven, sondern die Kurven verändern auch ihre Form, und insbesondere ändern sich ihre Steigungen. Die Steigungsänderung ist besonders im Betriebsbereich der Brennstoffzelle im Betriebsbereich kurz vor Erreichen des vollständigen Brennstoffumsatzes zu erkennen. Mit der Abweichung des tatsächlichen Umsatzes von der Sollbeziehung variiert also der Gradient der Spannung. Beispielsweise ist bei einem größeren Brennstoffvolumenstrom, also niedrigerem Brennstoffumsatz, die Steigung zwischen zwei Brennstoffumsatzwerten größer bei der Sollwertkurve.

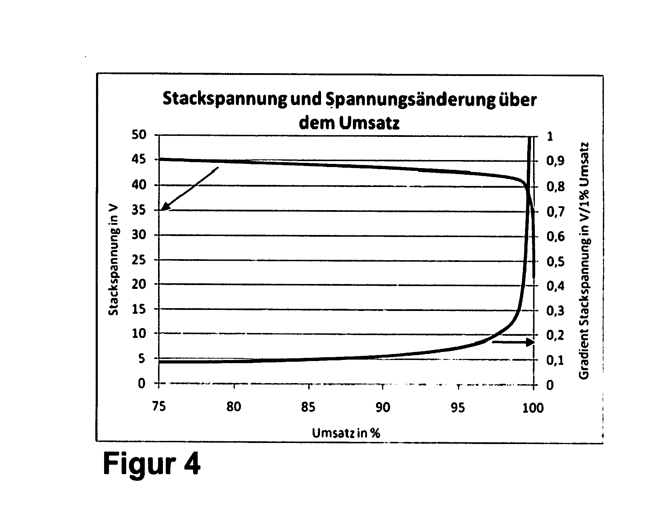

Dies wird aus Figur 4 besonders deutlich, wo einerseits eine Kennlinie der Stackspannung über den Umsatz und andererseits die zugehörige Spannungsänderung für ein Prozent für den Bereich hohen Brennstoffumsatzes (>75%) dargestellt ist. Man sieht deutlich, dass für einen Bereich über 95% Brennstoffumsatz die Spannungsänderung pro Umsatzprozent besonders stark ausgeprägt ist.

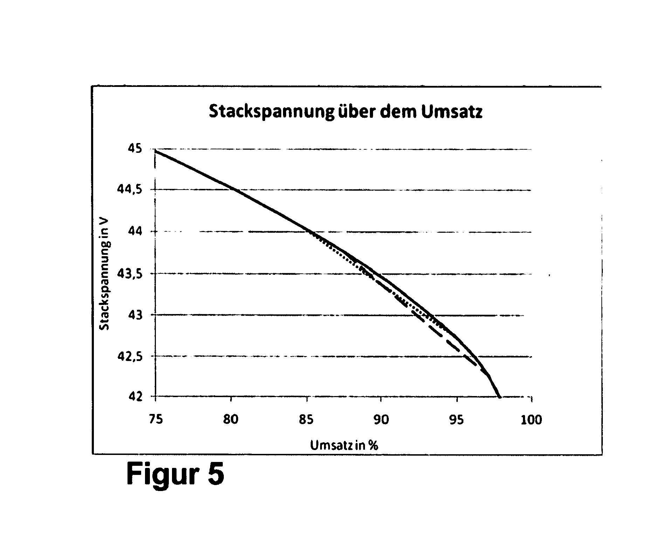

Eine andere Darstellung dieses Zusammenhangs zeigt Figur 5, die einen Ausschnitt der Kennlinie Stackspannung über dem Umsatz für den beispielhaften Brennstoffzellenstack darstellt. Die durchgezogene Linie entspricht der schon besprochene Kennlinie. Die gepunktete Linie zeigt die Sehne der Kennlinie zwischen zwei Punkten, die einem Umsatz von 85% und einem Umsatz von 95% entsprechen. Die gestrichelte Linie zeigt entsprechend die Sehne der Kennlinie zwischen zwei Punkten, die 87,5% und 97,5% Umsatz entsprechen. Wie man leicht erkennt, unterscheiden sich die Steigungen der beiden Sehnen trotz der verhältnismäßig geringen Verschiebungen im Umsatz erheblich.

Aus den Figuren 2 bis 5 lässt sich entnehmen, dass aus einer Änderung der Spannungs-Brennstoffumsatz-Kennlinie der tatsächliche Brennstoffumsatz ermitteln beziehungsweise eine Kalibrierung des Brennstoffumsatzes vornehmen lässt.

Dazu werden mindestens zwei Spannungswerte über die betrachtete Brennstoffzellenanordnung bei unterschiedlichen Brennstoffumsätzen entnommen, Im hier beschriebenen Beispiel wird die Änderung des Brennstoffumsatzes durch Variieren der zugeführten Brennstoffmenge erreicht, bei ansonsten konstanten Parametern. Alternativ kann die zugeführte Brennstoffmenge konstant gehalten werden, aber die von der Brennstoffzellenanordnung abgegebene Stromstärke geändert werden; dann muss allerdings bei der Analyse der Spannungs-Brennstoffumsatz-Beziehung berücksichtigt werden, dass die Spannungsänderung eine durch ohmsche Effekte in Zusammenhang mit der geänderten Stromstärke hervorgehobene Komponente umfasst.

Ein bevorzugtes Vorgehen besteht darin, zuerst den Brennstoffstrom (in diesem Fall den Brennstoffvolumenstrom) von einem Anfangswert, der als erster Spannungswert dienen kann, derart zu reduzieren, dass die Brennstoffzellenanordnung in ihr Umsatzlimit hereinläuft. Dort hat die Spannungs-Brennstoffumsatz-Beziehung einen deutlichen Spannungsabfall, der leicht zu identifizieren ist und der typischerweise einem Brennstoffumsatz von 99% entspricht. Die genaue Lage dieses Punktes ist allerdings von der Bauart der Brennstoffzellenanordnung abhängig. Der Wert der diesem charakteristischen Punkt entsprechenden Spannung ist gut als zweiter Spannungswert geeignet, da er einen leicht zu identifizierenden Messpunkt auf der Spannungs-Brennstoffumsatz-Kennlinie des tatsächlichen Brennstoffumsatzes bietet. Hier ist eine Variation von Parametern wie der Stromstärke bzw. des Brennstoffstromes notwendig, um den charakteristischen Punkt zu finden. Der erste Spannungswert dient bei diesem Ansatz unter Anderem dazu, die Lage des charakteristischen Punktes (die den zweiten Spannungswert liefert) zu bestimmen.

Nun kann die Brennstoffzufuhr erhöht werden, wodurch sich der Brennstoffumsatz verringert. Es ist zweckmäßig, die Brennstoffzufuhr soweit zu verringern, bis ein sicherer, deutlich von dem Spannungseinbruch weg liegender Betriebsbereich erreicht ist, beispielsweise ein um etwa 5% bis 10% niedrigerer Brennstoffumsatz. Hier kann ein weiterer Spannungswert erhalten werden.

Mit Hilfe des charakteristischen Punktes lässt sich unter Berücksichtigung der Kalibrationsdaten die Kennlinie identifizieren, auf der sich die Brennstoffzellenanordnung befindet. Zur Verbesserung der Genauigkeit können dabei der erste und der (oder die) weitere Spannungswert mit herangezogen werden.

Eine weitere Alternative besteht darin, ausgehend von einem Betriebspunkt, der einen ersten Spannungswert liefert, die Brennstoffzufuhr zu ändern, bis sich ein Unterschied in der Spannung über die Brennstoffzellenanordnung ergibt, der deutlich zu erkennen ist. Dies kann erreicht werden, ohne in den Bereich um die Brennstoffumsatzsättigung vorzustoßen, in dem der charakteristische Spannungsabfall aufgrund von Transportverlusten auftritt. Es ist zweckmäßig, bei dieser Alternative Spannungswerte im linearen Bereich der Spannungs-Brennstoffumsatz-Kennlinie zu ermitteln, der üblicherweise mit hoher Wahrscheinlichkeit den Bereich von etwa 45% bis 75% Brennstoffumsatz enthält.

Unter Ausnutzung der Gleichung 3 beziehungsweise der Sollwertbeziehung, insbesondere durch Vergleichen der gemessenen Daten mit den Kalibrierungsdaten der Sollwertbeziehung, lässt sich nun die Abweichung der tatsächlichen Daten von der Sollwertbeziehung bestimmen. Es ist besonders vorteilhaft, mehr als zwei Spannungswerte zu bestimmen, um mehr Messpunkte zu erhalten und damit die Genauigkeit und Zuverlässigkeit des Verfahrens zu erhöhen.

Eine weitere Alternative besteht darin, die Steigung einer Sehne zwischen zwei gemessenen Spannungswerten zu ermitteln. Wie in Figuren 4 und 5 gezeigt, ist die Steigung sehr empfindlich für Variationen des Brennstoffumsatzes und kann sehr gut dazu verwendet werden, die Abweichung der tatsächlichen Brennstoffumsatz-Kennlinie von der Sollwert-Kennlinie zu bestimmen. Wenn ausreichend Messpunkte vorliegen, kann sogar näherungsweise eine Ableitung der Kennlinie berechnet werden, also Tangenten bestimmt werden. Aus der Steigung der Sehnen beziehungsweise der Ableitung lässt sich durch Vergleich mit der Sollwertkennlinie beziehungsweise entsprechenden Sehnen oder Tangenten der tatsächliche Brennstoffumsatz bestimmen. Auch eine Kalibrierung der Anordnung ist so möglich.

Die Steuereinrichtung ist dazu ausgelegt, die Schritte mindestens einer der oben erwähnten Alternativen zur Bestimmung des tatsächlichen Brennstoffumsatzes beziehungsweise zur Kalibrierung vorzunehmen. Anstatt den Brennstoffstrom zu steuern und zu variieren, kann auch die Stromstärke variiert werden; dann wird bei der Bestimmung der zusätzliche ohmsche Effekt berücksichtigt.

Figur 7 zeigt schematisch den Aufbau einer beispielhaften Steuereinrichtung 100 für eine Brennstoffzellenanordnung. Die Steuereinrichtung 100 kann zum Beispiel mit der in Figur 1 gezeigten Brennstoffzellenanordnung verwendet werden.

Die Steuereinrichtung 100 umfasst eine Spannungsempfangseinrichtung 102, die zum Empfangen von Spannungswerten mit einem oder mehreren Spannungssensoren kommunizieren kann. Ferner umfasst die Steuereinrichtung 100 eine Brennstoffstromeinstelleinrichtung 103 zum Einstellen eines Brennstoffstromes, die beispielsweise zur Ansteuerung eines Proportionalventils für die Brennstoffzufuhr verbunden werden kann. Eine Stromstärkeneinstelleinrichtung 104 ist zum Einstellen einer von der Brennstoffzellenanordnung abgegebenen Stromstärke mit einer Stromstärkesteuereinrichtung verbindbar. Die Steuereinrichtung 100 weist einen Speicher 106 zum Speichern der Kalibrationsdaten auf. Es ist nicht notwendig, dass die Steuereinrichtung sowohl die Brennstoffstromeinstelleinrichtung 103 als auch die Stromstärkeneinstelleinrichtung 104 aufweist. Zur Bestimmung des tatsächlichen Brennstoffumsatzes reicht es, wenn eine dieser Einrichtungen vorgesehen ist.

Ein Mikroprozessor 108 kommuniziert mit der Spannungsempfangseinrichtung 102, der Brennstoffstromeinstelleinrichtung 103, der Stromstärkeneinstelleinrichtung 104 und dem Speicher 106. Die Spannungsempfangseinrichtung 102, die Brennstoffeinstelleinrichtung 103 und die Stromstärkeeinrichtung 104 können als spezielle Hardwareelemente ausgebildet sein, oder Softwarekomponenten umfassen, die von einem Prozessor ausgeführt werden können und über Schnittstellen kommunizieren.

Zusammenfassend lässt sich feststellen, dass die Erfindung insbesondere eine Steuereinrichtung, ein Verfahren zum Ermitteln eines tatsächlichen Brennstoffumsatzes einer Brennstoffzellenanordnung (10) sowie eine Brennstoffzellenanordnung ergibt, wie sie im Folgenden definiert sind, wobei sämtliche der nachfolgend aufgeführten Merkmale beziehungsweise Merkmalskombinationen so wesentlich für die Erfindung sind, dass sie gegebenenfalls Bestandteil der Ansprüche werden können (was nicht ausschließen soll, dass andere weiter oben genannte Merkmale oder Merkmalskombinationen ebenfalls so wesentlich für die Erfindung sind, dass sie gegebenenfalls Bestandteil der Ansprüche werden können).

    1. Steuereinrichtung (22, 100) zum Bestimmen eines tatsächlichen Brennstoffumsatzes für eine Brennstoffzellenanordnung (10), wobei die Steuereinrichtung (22, 100) umfasst:

        eine Spannungsempfangseinrichtung (102) zum Empfangen von Werten einer über der Brennstoffzellenanordnung (10) anliegenden Spannung;
        eine Brennstoffstromeinstelleinrichtung (103) zum Einstellen eines der Brennstoffzellenanordnung (10) zuführbaren oder zugeführten Brennstoffstromes und/oder eine Stromstärkeneinstelleinrichtung (104) zum Einstellen einer von der Brennstoffzellenanordnung (10) abgegebenen Stromstärke; und
        einen Speicher (106) zum Speichern von Kalibrationsdaten, welche eine Soll-Beziehung zwischen einem Brennstoffumsatz der Brennstoffzellenanordnung (10) und einer über der Brennstoffzellenanordnung (10) anliegenden elektrischen Spannung betreffen;
        wobei die Steuereinrichtung (22, 100) dazu ausgelegt ist, einen ersten Spannungswert zu empfangen;
        nach dem Empfangen des ersten Spannungswertes eine Änderung des der Brennstoffzellenanordnung (10) zugeführten Brennstoffstroms und/oder der von der Brennstoffzellenanordnung (10) abgegebenen Stromstärke zu steuern; und
        nach der Änderung einen zweiten Spannungswert zu empfangen;
        wobei die Steuereinrichtung (22, 100) ferner dazu ausgelegt ist,
        den tatsächlichen Brennstoffumsatz der Brennstoffzellenanordnung (10) basierend auf dem ersten Spannungswert, dem zweiten Spannungswert und den Kalibrationsdaten zu bestimmen.

    2. Steuereinrichtung nach 1., **dadurch gekennzeichnet, dass** die Kalibrationsdaten die Soll-Beziehung bei konstanter elektrischer Stromstärke beschreiben.

3. Steuereinrichtung nach 1., **dadurch gekennzeichnet, dass** die Kalibrationsdaten die Soll-Beziehung bei konstantem Brennstoffstrom beschreiben.

4. Steuereinrichtung nach 1., 2. oder 3., **dadurch gekennzeichnet, dass** die Steuereinrichtung dazu ausgelegt ist, den tatsächlichen Brennstoffumsatz basierend auf weiteren von der Spannungsempfangseinrichtung empfangenen Spannungswerten zu bestimmen.

5. Steuereinrichtung nach 1., **dadurch gekennzeichnet, dass** die Steuereinrichtung (22, 100) dazu ausgelegt ist, den Brennstoffstrom bei konstanter Stromstärke auf einen Zielwert einzustellen, bei dem die tatsächliche Spannungs-Brennstoffumsatz-Beziehung einen charakteristischen Übergang durchläuft.

6. Steuereinrichtung nach 5., **dadurch gekennzeichnet, dass** die Steuereinrichtung (22, 100) dazu ausgelegt ist, einen dem Zielwert entsprechenden Spannungswert als ersten Spannungswert zu empfangen.

7. Steuereinrichtung nach 5. oder 6., **dadurch gekennzeichnet, dass** der Zielwert einem Brennstoffumsatz von etwa 99% entspricht.

8. Steuereinrichtung nach 1., **dadurch gekennzeichnet,** dass die Steuereinrichtung (22, 100) dazu ausgelegt ist, die Stromstärke bei konstantem Brennstoffstrom auf einen Zielwert einzustellen, bei dem die tatsächliche Spannungs-Brennstoffumsatz-Beziehung einen charakteristischen Übergang durchläuft.

9. Steuereinrichtung nach 8., **dadurch gekennzeichnet,** dass die Steuereinrichtung (22, 100) dazu ausgelegt ist, einen dem Zielwert entsprechenden Spannungswert als ersten Spannungswert zu empfangen.

10. Steuereinrichtung nach 8. oder 9., **dadurch gekennzeichnet,** dass der Zielwert einem Brennstoffumsatz von etwa 99% entspricht.

11. Steuereinrichtung nach 1. bis 10., **dadurch gekennzeichnet,** dass die Steuereinrichtung (22, 100) dazu ausgelegt ist, den tatsächlichen Brennstoffumsatz basierend auf einer aus den empfangenen Spannungswerten berechneten Steigung zu bestimmen.

12. Verfahren zum Ermitteln eines tatsächlichen Brennstoffumsatzes einer Brennstoffzellenanordnung (10) , mit den Schritten:

Bereitstellen von vorbestimmten Kalibrationsdaten für eine Beziehung zwischen einem Brennstoffumsatz der Brennstoffzellenanordnung (10) und einer über der Brennstoffzellenanordnung (10) anliegenden elektrischen Spannung;
Erfassen einer über der Brennstoffzellenordnung (10) anliegenden ersten elektrischen Spannung,
Ändern eines der Brennstoffzellenanordnung (10) zugeführten Brennstoffstroms und/oder einer von der Brennstoffzellenanordnung (10) abgegebenen Stromstärke
Erfassen einer nach dem Schritt des Änderns über der Brennstoffzellenanordnung (10) anliegenden zweiten elektrischen Spannung,
Bestimmen des tatsächlichen Brennstoffumsatzes der Brennstoffzellenanordnung (10) basierend auf der ersten elektrischen Spannung, der zweiten elektrischen Spannung und den Kalibrationsdaten.

13. Verfahren nach 12., **dadurch gekennzeichnet,** dass die Kalibrationsdaten die Soll-Beziehung bei konstanter elektrischer Stromstärke beschreiben.

14. Verfahren nach 12., **dadurch gekennzeichnet,** dass die Kalibrationsdaten die Soll

Beziehung bei konstantem Brennstoffstrom beschreiben.

15. Verfahren nach 12., 13. oder 14., **dadurch gekennzeichnet, dass** das Bestimmen des tatsächlichen Brennstoffumsatzes basierend auf weiteren von der Spannungsempfangseinrichtung empfangenen Spannungswerten durchgeführt wird.

16. Verfahren nach 13., **dadurch gekennzeichnet, dass** der Brennstoffstrom bei konstanter Stromstärke auf einen Zielwert eingestellt wird, bei dem die tatsächliche Spannungs-Brennstoffumsatz-Beziehung einen charakteristischen Übergang durchläuft.

17. Verfahren nach 16., **dadurch gekennzeichnet, dass** ein dem Zielwert entsprechender Spannungswert als erster Spannungswert empfangen wird.

18. Verfahren nach 17., **dadurch gekennzeichnet, dass** der Zielwert einem Brennstoffumsatz von etwa 99% entspricht.

19. Verfahren nach 14., **dadurch gekennzeichnet, dass** die Stromstärke bei konstantem Brennstoffstrom auf einen Zielwert eingestellt wird, bei dem die tatsächliche Spannungs-Brennstoffumsatz-Beziehung einen charakteristischen Übergang durchläuft.

20. Verfahren nach 19., **dadurch gekennzeichnet, dass** ein dem Zielwert zugeordnete Spannungswert als erster Spannungswert empfangen wird.

21. Verfahren nach 20., **dadurch gekennzeichnet, dass** der Zielwert einem Brennstoffumsatz von etwa 99% entspricht.

22. Verfahren nach 12. bis 21., **dadurch gekennzeichnet, dass** der tatsächliche Brennstoffumsatz basierend auf einer aus den empfangenen Spannungswerten berechneten Steigung bestimmt wird.

23. Verfahren nach 12. bis 22., **dadurch gekennzeichnet, dass** die Brennstoffzellenanordnung (10) ein Brennstoffzellenstack ist.

24. Verfahren nach 12. bis 22., **dadurch gekennzeichnet, dass** die Brennstoffzellenanordnung (10) eine Brennstoffzelle (12) ist.

25. Verfahren nach 12. bis 22., **dadurch gekennzeichnet,** dass die Brennstoffzellenanordnung (10) zwei oder mehr Brennstoffzellen (12) umfasst.

26. Verfahren nach 25., **dadurch gekennzeichnet,** dass die Brennstoffzellen (10) Teil eines Brennstoffzellenstacks sind .

27. Brennstoffzellenanordnung mit einer Messeinrichtung (24, 28) zum Erfassen einer über der Brennstoffzellenanordnung (10) anliegenden Spannung, und einer Steuereinrichtung (22, 100) nach 1. bis 11.

28. Brennstoffzellenanordnung nach 27., **dadurch gekennzeichnet,** dass die Brennstoffzellenanordnung (10) ein Brennstoffzellenstack ist.

29. Brennstoffzellenanordnung nach 27., **dadurch gekennzeichnet,** dass die Brennstoffzellenanordnung (10) eine Brennstoffzelle (12) ist.

30. Brennstoffzellenanordnung nach 27., **dadurch gekennzeichnet,** dass die Brennstoffzellenanordnung (10) zwei oder mehr Brennstoffzellen (12) umfasst.

31. Brennstoffzellenanordnung nach 30., wobei die Brennstoffzellen (12) Teil eines Brennstoffzellenstacks sind.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**

| | |
|---|---|
| 10 | Brennstoffzellenstack 12 Brennstoffzelle |
| 14 | Polar/Bipolarplatte |
| 16 | Brenngaszuführung |
| 18 | Brenngasableitung |
| 20 | Ventil |
| 22 | Steuereinrichtung |
| 24 | Spannungssensor |
| 26 | elektrische Last |
| 28 | weiterer Spannungssensor |
| 100 | Steuereinrichtung |
| 102 | Spannungsempfangseinrichtung |
| 103 | Brennstoffstromeinstelleinrichtung |
| 104 | Stromstärkeeinrichtung |
| 106 | Speicher |
| 108 | Mikroprozessor |

**Patentansprüche**

1. Steuereinrichtung (22, 100) zum Bestimmen eines tatsächlichen Brennstoffumsatzes für eine Brennstoffzellenanordnung (10), wobei die Steuereinrichtung (22, 100) umfasst:

eine Spannungsempfangseinrichtung (102) zum Empfangen von Werten einer über der Brennstoffzellenanordnung (10) anliegenden Spannung;
eine Brennstoffstromeinstelleinrichtung (103) zum Einstellen eines der Brennstoffzellenanordnung (10) zuführbaren oder zugeführten Brennstoffstromes und/oder eine Stromstärkeneinstelleinrichtung (104) zum Einstellen einer von der Brennstoffzellenanordnung (10) abgegebenen Stromstärke; und
einen Speicher (106) zum Speichern von Kalibrationsdaten, welche eine Soll-Beziehung zwischen einem Brennstoffumsatz der Brennstoffzellenanordnung (10) und einer über der Brennstoffzellenanordnung (10) anliegenden elektrischen Spannung betreffen;
wobei die Steuereinrichtung (22, 100) dazu ausgelegt ist, einen ersten Spannungswert zu empfangen;
nach dem Empfangen des ersten Spannungswertes eine Änderung des der Brennstoffzellenanordnung (10) zugeführten Brennstoffstroms und/oder der von der Brennstoffzellenanordnung (10) abgegebenen Stromstärke zu steuern; und
nach der Änderung einen zweiten Spannungswert zu empfangen;
wobei die Steuereinrichtung (22, 100) ferner dazu ausgelegt ist,

den tatsächlichen Brennstoffumsatz der Brennstoffzellenanordnung (10) basierend auf dem ersten Spannungswert, dem zweiten Spannungswert und den Kalibrationsdaten zu bestimmen.

2. Steuereinrichtung nach Anspruch 1, **dadurch gekennzeichnet, dass** die Kalibrationsdaten die Soll-Beziehung bei konstanter elektrischer Stromstärke beschreiben.

3. Steuereinrichtung nach Anspruch 1, **dadurch gekennzeichnet, dass** die Kalibrationsdaten die Soll-Beziehung bei konstantem Brennstoffstrom beschreiben.

4. Steuereinrichtung nach Anspruch 1, 2 oder 3, **dadurch gekennzeichnet, dass** die Steuereinrichtung dazu ausgelegt ist, den tatsächlichen Brennstoffumsatz basierend auf weiteren von der Spannungsempfangseinrichtung empfangenen Spannungswerten zu bestimmen.

5. Steuereinrichtung nach Anspruch 1, **dadurch gekennzeichnet, dass** die Steuereinrichtung (22, 100) dazu ausgelegt ist, den Brennstoffstrom bei konstanter Stromstärke auf einen Zielwert einzustellen, bei dem die tatsächliche Spannungs-Brennstoffumsatz-Beziehung einen charakteristischen Übergang durchläuft, dass die Steuereinrichtung (22, 100) ggf. dazu ausgelegt ist, einen dem Zielwert entsprechenden Spannungswert als ersten Spannungswert zu empfangen, und dass der Zielwert ggf. einem Brennstoffumsatz von etwa 99% entspricht.

6. Steuereinrichtung nach Anspruch 1, **dadurch gekennzeichnet, dass** die Steuereinrichtung (22, 100) dazu ausgelegt ist, die Stromstärke bei konstantem Brennstoffstrom auf einen Zielwert einzustellen, bei dem die tatsächliche Spannungs-Brennstoffumsatz-Beziehung einen charakteristischen Übergang durchläuft, dass die Steuereinrichtung (22, 100) ggf. dazu ausgelegt ist, einen dem Zielwert entsprechenden Spannungswert als ersten Spannungswert zu empfangen, und dass der Zielwert ggf. einem Brennstoffumsatz von etwa 99% entspricht.

7. Steuereinrichtung nach einem der vorhergehenden Ansprüche, **dadurch gekennzeichnet, dass** die Steuereinrichtung (22, 100) dazu ausgelegt ist, den tatsächlichen Brennstoffumsatz basierend auf einer aus den empfangenen Spannungswerten berechneten Steigung zu bestimmen.

8. Verfahren zum Ermitteln eines tatsächlichen Brennstoffumsatzes einer Brennstoffzellenanordnung (10), mit den Schritten:

Bereitstellen von vorbestimmten Kalibrationsdaten für eine Beziehung zwischen einem Brennstoffumsatz der Brennstoffzellenanordnung (10) und einer über der Brennstoffzellenanordnung (10) anliegenden elektrischen Spannung;

Erfassen einer über der Brennstoffzellenordnung (10) anliegenden ersten elektrischen Spannung,

Ändern eines der Brennstoffzellenanordnung (10) zugeführten Brennstoffstroms und/oder einer von der Brennstoffzellenanordnung (10) abgegebenen Stromstärke

Erfassen einer nach dem Schritt des Änderns über der Brennstoffzellenanordnung (10) anliegenden zweiten elektrischen Spannung,

Bestimmen des tatsächlichen Brennstoffumsatzes der Brennstoffzellenanordnung (10) basierend auf der ersten elektrischen Spannung, der zweiten elektrischen Spannung und den Kalibrationsdaten.

9. Verfahren nach Anspruch 8, **dadurch gekennzeichnet, dass** die Kalibrationsdaten die Soll-Beziehung bei konstanter elektrischer Stromstärke beschreiben oder dass die Kalibrationsdaten die Soll-Beziehung bei konstantem Brennstoffstrom beschreiben.

10. Verfahren nach Anspruch 8 oder 9, **dadurch gekennzeichnet, dass** das Bestimmen des tatsächlichen Brennstoffumsatzes basierend auf weiteren von der Spannungsempfangseinrichtung empfangenen Spannungswerten durchgeführt wird.

11. Verfahren nach Anspruch 8, **dadurch gekennzeichnet, dass** die Kalibrationsdaten die Soll-Beziehung bei konstanter elektrischer Stromstärke beschreiben, dass der Brennstoffstrom bei konstanter Stromstärke auf einen Zielwert eingestellt wird, bei dem die tatsächliche Spannungs-Brennstoffumsatz-Beziehung einen charakteristischen Übergang durchläuft, dass ggf. ein dem Zielwert entsprechender Spannungswert als erster Spannungswert empfangen wird, und dass ggf. der Zielwert einem Brennstoffumsatz von etwa 99% entspricht.

12. Verfahren nach Anspruch 8, **dadurch gekennzeichnet, dass** die Kalibrationsdaten die Soll-Beziehung bei konstantem Brennstoffstrom beschreiben, dass die Stromstärke bei konstantem Brennstoffstrom auf einen Zielwert eingestellt wird, bei dem die tatsächliche Spannungs-Brennstoffumsatz-Beziehung einen charakteristischen Übergang durchläuft, dass ggf. ein dem Zielwert zugeordnete Spannungswert als erster Spannungswert empfangen wird, und ggf. der Zielwert einem Brennstoffumsatz von etwa 99% entspricht.

**13.** Verfahren nach einem der Ansprüche 8 bis 12, **dadurch gekennzeichnet, dass** der tatsächliche Brennstoffumsatz basierend auf einer aus den empfangenen Spannungswerten berechneten Steigung bestimmt wird, wobei die Brennstoffzellenanordnung (10) vorzugsweise zumindest eine Brennstoffzelle (12) oder ein Brennstoffzellenstack ist.

**14.** Brennstoffzellenanordnung mit
einer Messeinrichtung (24, 28) zum Erfassen einer über der Brennstoffzellenanordnung (10) anliegenden Spannung, und
einer Steuereinrichtung (22, 100) nach einem der Ansprüche 1 bis 7.

**15.** Brennstoffzellenanordnung nach Anspruch 14, **dadurch gekennzeichnet, dass** die Brennstoffzellenanordnung (10) ein Brennstoffzellenstack, eine Brennstoffzelle (12) oder eine Brennstoffzellenanordnung (10) mit zwei oder mehr Brennstoffzellen (12) ist, wobei die Brennstoffzellen (12) ggf. Teil eines Brennstoffzellenstacks sein können.

Figur 1

Figur 2

- 5 -

**Brenngasvolumenstromvariierte Betriebsspannung**

Figur 3

**Figur 4**

Figur 5

Figur 6

Europäisches
Patentamt

European
Patent Office

Office européen
des brevets

## EUROPÄISCHER RECHERCHENBERICHT

Nummer der Anmeldung

EP 10 00 3610

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2005/014043 A1 (KOZU KATSUMI [JP] ET AL) 20. Januar 2005 (2005-01-20) <br><br> * Absätze [0079] - [0133]; Abbildungen 1,2,7-9 * <br> ----- | 1,3-6, 8-12,14, 15 | INV. H01M8/04 |
| A | EP 1 091 437 A1 (TOYOTA MOTOR CO LTD [JP]) 11. April 2001 (2001-04-11) * das ganze Dokument * <br> ----- | 1-15 | |
| A | US 2005/040786 A1 (ICHINOSE TOSHIHIKO [JP] ET AL) 24. Februar 2005 (2005-02-24) <br> ----- | 1-15 | |
| A | WO 2009/025614 A1 (MYFC AB [SE]; LUNDBLAD ANDERS [SE]; EKSTROEM HENRIK [SE]; JONSSON ERIC) 26. Februar 2009 (2009-02-26) * das ganze Dokument * <br> ----- | 1-15 | |

RECHERCHIERTE
SACHGEBIETE (IPC)

H01M

Der vorliegende Recherchenbericht wurde für alle Patentansprüche erstellt

| Recherchenort | Abschlußdatum der Recherche | Prüfer |
|---|---|---|
| München | 16. Juli 2010 | Brune, Markus |

KATEGORIE DER GENANNTEN DOKUMENTE

X : von besonderer Bedeutung allein betrachtet
Y : von besonderer Bedeutung in Verbindung mit einer
　　anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
　　nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
　　Dokument

EPO FORM 1503 03.82 (P04C03)

**EP 2 244 326 A1**

## ANHANG ZUM EUROPÄISCHEN RECHERCHENBERICHT
## ÜBER DIE EUROPÄISCHE PATENTANMELDUNG NR.

EP 10 00 3610

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-07-2010

| Im Recherchenbericht angeführtes Patentdokument | Datum der Veröffentlichung | Mitglied(er) der Patentfamilie | Datum der Veröffentlichung |
|---|---|---|---|
| US 2005014043 A1 | 20-01-2005 | US 2010143812 A1 | 10-06-2010 |
| EP 1091437 A1 | 11-04-2001 | BR 9912195 A | 27-07-2004 |
| | | CA 2333122 A1 | 29-12-1999 |
| | | CN 1307735 A | 08-08-2001 |
| | | CZ 20004840 A3 | 13-06-2001 |
| | | ES 2318894 T3 | 01-05-2009 |
| | | WO 9967846 A1 | 29-12-1999 |
| | | JP 4464474 B2 | 19-05-2010 |
| | | JP 2000012059 A | 14-01-2000 |
| | | PL 344400 A1 | 05-11-2001 |
| | | RU 2226018 C2 | 20-03-2004 |
| | | US 2001018138 A1 | 30-08-2001 |
| US 2005040786 A1 | 24-02-2005 | JP 2005063901 A | 10-03-2005 |
| WO 2009025614 A1 | 26-02-2009 | CA 2695218 A1 | 26-02-2009 |
| | | EP 2195871 A1 | 16-06-2010 |

EPO FORM P0461

**EP 2 244 326 A1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 11097049 A